# EUROPEAN PATENT APPLICATION

(11) **EP 1 386 544 A1**
(43) Date of publication of application: **04.02.2004**
(21) Application number: 03254822.4
(22) Date of filing: 01.08.2003
(51) Int. Cl.: A23L 1/01, A47J 27/16

(54) **Method and apparatus for browning and cooking food products with superheated steam**

(30) Priority: 01.08.2002 US 400121 P; 05.08.2002 US 401097 P; 23.01.2003 US 349324
(71) Applicant: Pyramid Food Processing Equipment Manufacturing Inc., Massachusetts 01876 (US)
(72) Inventor: Holm, Mark E., Cherry Hill, NJ 08034 (US); Poissant, John V., Hampton, NJ 03842 (US); Souza, Kevin M., Amesbury, MA 01913 (US)
(74) Representative: W.P. Thompson & Co.

(57) **Abstract**

A method and an apparatus (10) using superheated steam (above 212°F, e.g., 230° to 750°F) to brown a food product (16) in a radiant wall oven. The release of the superheated steam occurs about 1" to 18" from the food product (16). Superheated steam is also used to cook the food product (16). Lower temperature, i.e., non-superheated, steam (160° to 212°F) can be combined with the superheated steam to cook the food product (16).

## Description

### BACKGROUND OF THE INVENTION

### 1. Field of the Invention

The present invention relates generally to browning foods and, more particularly, to commercial browning and fully cooking food products, such as meats and vegetables, in a faster, more efficient manner.

### 2. Description of the Related Art

It is known in the art to use an artificial browning agent such as liquid smoke, caramelizers, etc., with, e.g., meats to brown the surface of the meat in the presence of heat. The meat is dipped in the agent or otherwise coated prior to heating.

For example, U.S. Patent No. 5,952,027 issued to Singh describes a method for "browning" whole muscle meats. Pre-cooked meat is coated with the agent and the color is set on the product surface using a heat source at a range of 100°C to 290°C. Related pending U.S. Publication No. 2002/014208 of Singh similarly describes a method for coloring precooked meats that are treated with an agent. In this application, heating temperatures are described as greater than about 400°F, and preferably between 425° and 700°C, using, e.g., infrared energy.

Of course, the use of such browning agents requires additional time to apply the agent, and adds to the cost of preparing the browned product. Further, such artificial coloring does not usually lead to a product which appears to have the attributes of a naturally browned food product. Finally, yields may be reduced in the usually dry atmosphere of the oven. Accordingly, it would be desirable to develop an apparatus and a process for browning that do not depend upon artificial browning agents to give the product an acceptable brown surface.

A cooking and browning system is described in Forney, U.S. Pat. No. 4,737,373, which does not rely upon artificial browning agents. High velocity air at a temperature of about 750° to 1000°F is used in an oven to brown meat, poultry or other food products. Separately, before or after the browning step, the food product is cooked at a lower temperature (about 160° to 220°F) and more slowly, such as in a conventional steam cabinet on a continuous flow basis. By conventional steam, it is meant water that is converted into vapor at its boiling point, usually at atmospheric pressure: the steam is saturated, i.e., it has high humidity.

Other high temperature ovens, such as infrared ovens using Calrods and gas infrared heaters, into which conventional steam is introduced, are also known. See, e.g., U.S. Patent Nos. 5,512,312 and 5,942,142, which relate to browning and cooking of food products, such as chicken breasts, using infrared energy, while introducing conventional steam into a radiant wall oven. The above-discussed Singh patent and application do not use steam during any browning steps.

The ability to process products in a high humidity environment, such as conventional steam, gives the processor an advantage in product yields due to less moisture loss in the food product. The utilization of conventional steam processing also provides a fairly high heat transfer coefficient, which aids in reducing processing time.

One drawback to the above-described use of conventional steam during browning is that the finished product exhibits a "washed out" appearance as if it were boiled in water. Such an appearance makes the product less palatable, and therefore less commercially viable.

Thus, the prior art discussed above fails to provide a method or an apparatus for producing the desired browning for a food product, at improved yields, and in a faster time.

### SUMMARY OF THE INVENTION

Accordingly, it is an object of the present invention to provide a better (e.g. faster) method of browning and/or cooking food products, while maintaining high product yield. By use of the present invention one or more of the following may also be achieved:-

(a) a faster method for browning and/or cooking food products. In the event of the method involving both browning and cooking, then browning and cooking can be done in either order.

(b) a method and apparatus for browning and cooking food products in a single cycle, on a single conveyer path.

(c) a method for browning food products which results in a more palatable food product.

(d) an apparatus and a method for browning food products without the need for artificial browning agents.

(e) a method for producing a browned food product which does not appear to have been boiled.

(f) use of superheated steam in a high temperature oven environment, i.e., up to about 1540°F, to brown food products.

(g) use of superheated steam in a high temperature oven, i.e., up to about 1540°F, to brown food products, in association with superheated steam cooking.

(h) a high temperature apparatus and method, wherein a food product is imparted with a more natural brown appearance, but the yield is improved relative to conventional browning apparatus and methods.

(i) use of superheated steam in a high temperature environment, to brown food products, in association with combined superheated/conventional steam cooking.

(j) a method and apparatus to more evenly brown and cook a food product in a single cycle, on a single conveyor path.

(k) a method and apparatus to brown the surface of a frozen food product without first thawing the food product.

(l) provision of a food product surface that is more evenly browned and darker, i.e., appearing more naturally browned than is available with the use of conventional artificial browning agents alone.

(m) an improved superheated browning apparatus and method which can be used either prior to or after cooking of the food product.

To achieve the forgoing and other purposes of the present invention, the invention generally includes the use of "superheated" steam to brown food products, which browning can occur with or without separate heat. By superheated steam it is meant steam heated to a temperature higher than the boiling point corresponding to its pressure: said steam is relatively dry.

The present inventors have also found that the natural browning of food products with infrared energy can be significantly improved with the addition of superheated steam. That is, the food product surface can be more evenly browned and made darker with the combination of infrared energy and superheated steam.

More particularly, the present invention uses superheated steam (above 212° F and preferably 230° to 750° F) to brown a food product. Preferably the browning occurs in a radiant wall oven in the temperature range of about 540° to about 1540°F. The browning takes about 10 to 240 seconds. The release of the superheated steam preferably occurs about 1" to 18" from the food product.

The invention also includes the use of superheated steam to cook the food product. That is, processing time can be decreased when the product is placed in a superheated steam environment.

Processing time can be further decreased when the food product is placed in a superheated steam environment in combination with lower temperature, i.e., conventional, steam (160°F to 212°F). This mixing of superheated and non-superheated steam can be utilized to create the desired atmosphere in the processing equipment to maximize product yield, and maintain proper desired browning characteristics of the product, while decreasing time for thermal processing to a desired internal product temperature.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

The accompanying drawings, which are incorporated in and constitute a part of the specification, illustrate embodiments of the invention and, together with the description, serve to explain the principles of the invention.

FIG. 1 is a schematic side view of a superheated steam food product processor according to a first embodiment of the present invention.

FIG. 2 is a schematic front view of the processor shown in Fig. 1.

FIG. 3 is a side view of a processor used in accordance with a second embodiment of the present invention, including a radiant wall oven.

FIG. 4 is a front view of the processor shown in Fig. 3.

FIG. 5 is a partial side cross sectional view of the processor shown in Fig. 3.

FIG. 6 is a side cross sectional view of a processor with separate browning and cooking chambers.

FIG. 7 depicts a browned chicken breast according to the present invention.

FIG. 8 depicts browned sausages according to the present invention.

FIG. 9A depicts uncooked pork chops used in the Examples.

FIG. 9B depicts pork chops browned using a conventional method.

FIG. 9C depicts pork chops browned using a method according to the present invention.

FIG 10A depicts hot peppers used in the Examples.

FIG. 10B depicts hot peppers browned using a conventional method.

FIG. 10C depicts hot peppers browned using a method according to the present invention.

FIG 11A depicts uncooked salmon filets used in the Examples.

FIG. 11B depicts salmon browned using a conventional method.

FIG. 11C depicts salmon browned using a method according to the present invention.

FIG. 12A depicts an uncooked turkey breast used in the Examples.

FIG. 12B depicts turkey breast browned using a conventional method.

FIG. 12C depicts turkey breast browned using a method according to the present invention.

### DESCRIPTION OF THE EMBODIMENTS

The present inventors have discovered that superheated steam, when applied to food products, cooked or uncooked, can lead to improved surface browning of the food product. In this regard, the superheated steam can even be applied to the food product at ambient temperature, i.e., without any other heat source influence. Alternatively, the superheated steam can be applied in the presence of heat, including infrared, up to at least 1500°F. Optionally, the food product can be cooked, either prior to or after browning, via superheated steam or a combination of superheated steam and conventional steam, as discussed below.

By food products, it is meant any food that is usually prepared with a browned surface, such as meat (e.g., bacon, pork chops, sausage, hamburger patties), poultry (e.g., whole turkey, chicken breasts or wings), seafood, vegetables (e.g., French fries, peppers), convenience or snack foods (e.g., burritos), pizza, breads, cookies, and pastries. Other such food products are contemplated by the present invention, and would be known to one of ordinary skill in the art.

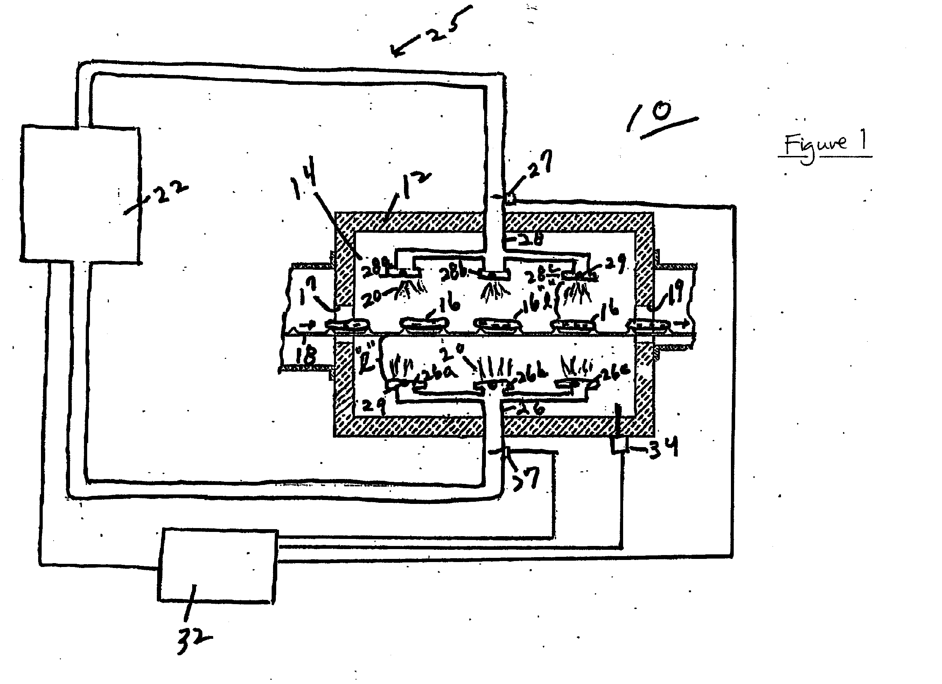

In a first embodiment, shown in Figs. 1-2, superheated steam is applied to food products in a processor 10. The processor 10 has walls 12 that are preferably made of stainless steel, and define an internal chamber 14 for browning food products 16.

A product belt or conveyor 18 is shown for continuously moving the food products 16 through the processor 10. In this regard, the processor 10 includes an inlet 17 through which the conveyer 18 enters, and an outlet 19 at the other end of the processor 10, through which the conveyor 18 exits.

It is not necessary to close off the inlet 17 and/or outlet 19 when using the superheated steam according to the present invention. That is, even though the superheated steam is under pressure in the piping described below, there is no need to provide a pressure-tight environment for its use.

As an alternative to the conveyor 18, the processing could be static, wherein one or more food products 16 is browned in a batch procedure, i.e., loaded into the processor 10 and removed after the browning cycle. A batch type procedure would be more appropriate for browning smaller quantities of food products, such as in a home or a small institutional kitchen (either of which would require a superheated steam source).

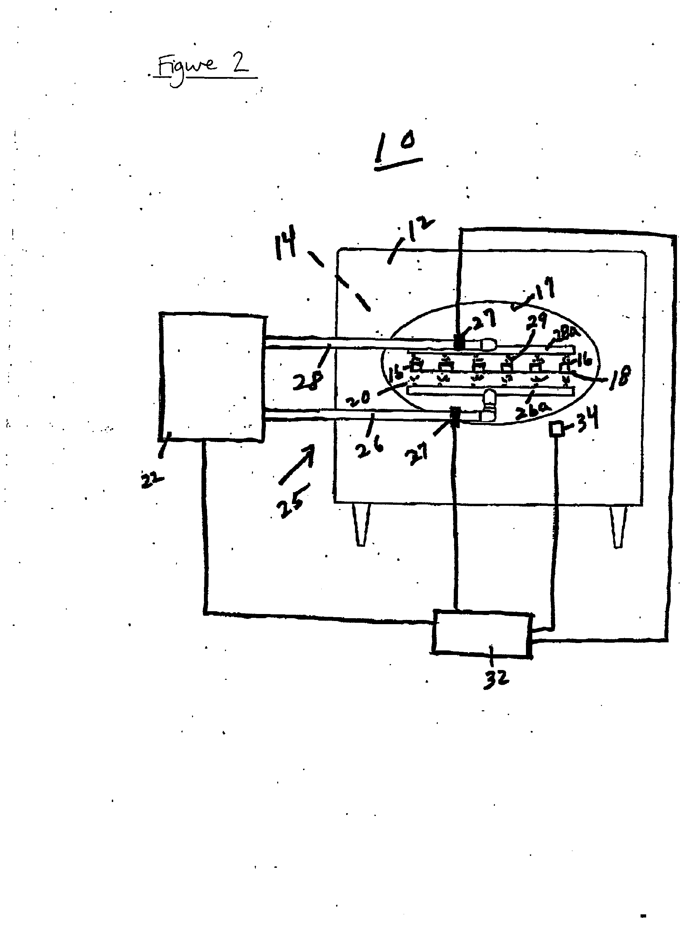

Figs. 1 and 2 also show superheated steam 20 being injected into the processor 10 from a superheated steam source 22. The source 22 can be a boiler, such as a Chromalox Super Heater ZMP059. The superheated steam 20 is preferably introduced into the chamber 14 of the processor 10 via stainless steel tubes 26, 28, which are part of a line 25 extending from the source 22 to the inside of the processor 10.

The tubes 26, 28 preferably include a plurality of tubes 26a, 26b, 28a, 28b, etc., along the chamber 14, so that the superheated steam 20 delivery is continuous along the length of the chamber 14. Each tube is preferably a ¾" OD stainless steel tube with six to eight (8) .035" X .785" slots 29 for even steam delivery throughout the length of the chamber 14 of the processor 10. The tubes 26, 28 can be positioned above, below and even on the sides of the food products 16 being conveyed through the browning chamber 14 so as to assist in browning the entire surface of each food product.

Of course, when the food product 16 is exposed to the superheated steam, the product begins to cook to some extent. However, the browning according to the present invention is completed prior to the food product 16 being fully cooked. Of course, in embodiments described below, browning and cooking can be performed relatively simultaneously, wherein the dwell time of the food product in the presence of a heat source, such as steam (superheated and/or conventional), is increased so that the food product is fully cooked, either prior to or after browning.

The superheated steam 20 is introduced via the steam line 25 into the processor 10 above 212°F and up to about 750°F, and preferably about 300 - 500°F, and more preferably about 400°F. The temperature is dependent upon the type of food product. For example, in order to brown bacon, a temperature of about 500°F would be appropriate. Preferably the line runs at a constant pressure of 15 psi.

The superheated steam 20 temperature/pressure/flow can be measured by sensors 27, including e.g., a thermocouple, positioned in the stainless steel tubes 26, 28 just prior to a point where the steam 20 exits at slots 29 into the atmosphere of chamber 14. The variables in the line 25 are basically steam flow and temperature, which are controlled electronically. The sensors 27 are connected to a controller 32, such as the Honeywell UDC 3300 Digital Controller, which controls the steam source 22. An appropriate temperature sensor can be a Spirax Sarco temperature probe connected to a temperature indicator, controller or flow computer. Spirax Sarco is located in Blythewood, South Carolina. A suitable pressure sensor can be a Spirax Sarco pressure sensor. Generally, the pipes 26, 28, sensors 27, etc., of the steam line 25 are stainless steel. Also, all piping is to be insulated.

The temperature in the chamber 14 is measured by a thermocouple 34, also connected to the controller 32.

It has been found that, when the superheated steam 20 is intentionally directed towards the surface of the food product 16, more rapid browning of the surface occurs. In this regard, it has been found that placing the slots 29 a distance "I" about 1" to 18" from the food product 16 surface provides preferred results.

Putting the slot 29 closer to the food product 16 surface than about 1" may cause a brown stripe to be formed on the food product surface, or light food products might be blown around on the conveyor 18 by the emitted steam. Neither of these results is preferred. Putting the superheated steam slot 29 farther away than about 18" may not lead to optimum browning of the food product surface, since the superheated steam may loose its desired temperature from the slot 29 to the food product, or may not impinge directly on the food product surface.

For the effectiveness of the superheated steam, it also appears necessary for the steam to actually contact the surface of the food product. Accordingly, food products in packaging would not be browned like an unpackaged food product using the present invention.

Tests were performed to determine the effectiveness of superheated steam in browning food products in an ambient atmosphere. In these tests, superheated steam was generated by running a coil of conventional steam through a radiant wall oven, as discussed below. These tests, summarized in Table 1 below, show that even at ambient temperatures, when the superheated steam is impinged upon the product surface, browning can occur.

**TABLE 1**

| Radiant Wall Oven Temp. °F | Shop Temp. °F | Steam Temp. °F | Comments |
|---|---|---|---|
| 1000°F | 76° | 322°F | Started to brown |
| 1050°F | 77° | 335°F | Little more browning |
| 1100°F | 77° | 370°F | Good browning |
| 1150°F | 78° | 372°F | Excellent browning 1.5 min. |

It should be understood that although the order of cooking/browning will ordinarily be browning first in the processor 10, then full cooking, these steps can be accomplished in the reverse order. That is, for on-site cooking (such as in franchise food outlets), where yield is not so important, it may sometimes be desirable to perform the cooking step first. In many cases where the food product has been frozen, it is important to do the browning step first in order to assure that the browning effect is limited to the outside of the product, with little penetration.

If the browned food product 16 was not previously cooked, it can be removed from the conveyer 18 and stored until it is ready for cooking. For example, the browned food product 16 can be frozen, shipped, and cooked in a commercial or home oven. Alternatively, as described below, the browned food product 16 can be immediately cooked in a processor 10, including an integral heat source or in a separate heat or steam source, as discussed below. If the food product was cooked prior to browning, the browned food product 16 can then be frozen and shipped and, at the destination, thawed and heated in a commercial or home oven.

The present invention also allows the surface of a frozen food product to be browned by the use of superheated steam, without having to thaw the food product. In this way, the food product stays frozen through browning, packaging, shipping and storage, until it is ready for cooking.

In the above-described first embodiment, the browning can take place at ambient temperature in the processor 10. In the following second embodiment, the processor 10 includes a single chamber in which browning occurs in the presence of both superheated steam and added heat. The temperature of the added heat can be from just above ambient to in excess of 1500°F, preferably towards the upper end of this range.

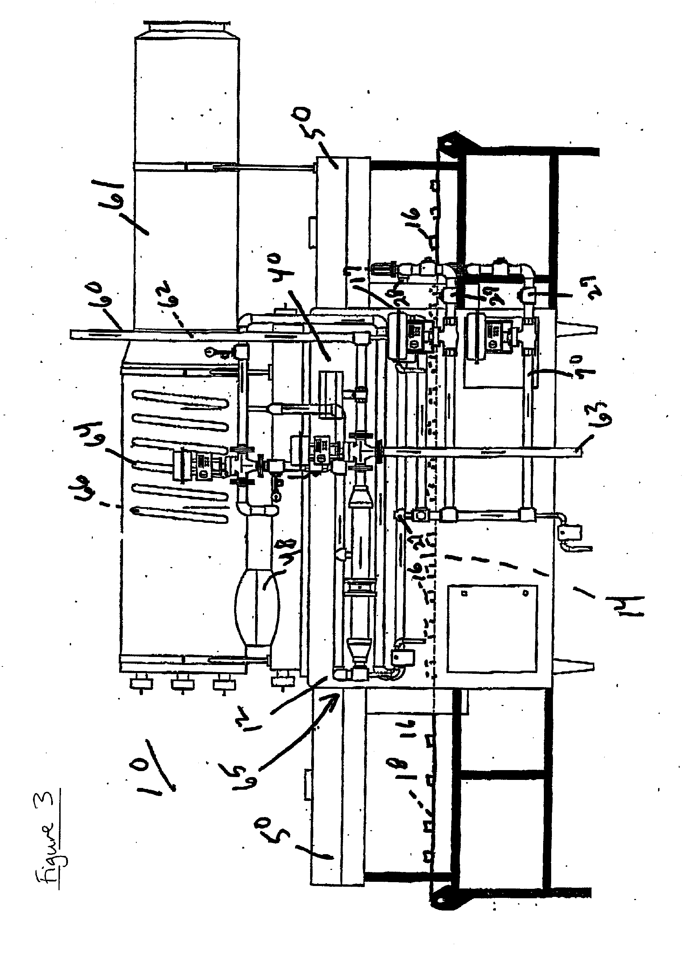

As shown in Figs. 3-4, the walls 12 of the processor 10 again define the internal chamber 14 for browning food products 16. The conveyor 18 continuously moves the food products 16 through the chamber 14. As an example of actual operating conditions, the conveyor 18 may be about 40" wide, and about 40' long. One square foot of belt 18 should be able to hold, e.g., nine strips of bacon.

In addition, the processor 10 includes a heat system 40 which, may be in the form of, e.g., a steam cabinet, a conventional, non-infrared oven, or an infrared, e.g., radiant wall oven. The temperature in a steam cabinet would generally be about 170° to 212°F, but usually about 212°F. In a conventional, non-infrared oven the operating temperature would usually be about 540°F. In an infrared oven, the temperature would be about 800° to 1540° F.

If a relatively lower temperature heat source is used, an external superheated steam source, like 22 described above, would be used to provide the superheated steam for browning. With the relatively high temperature heat source described above, either an external superheated steam source 22 would be used, which may already be available at a processing plant, or it is possible to use the heat source per se to produce the superheated steam, as discussed below.

The present inventors have found that any food product subjected to infrared heat in combination with superheated steam will exhibit more even and darker surface browning than conventional browning methods at an infrared oven operating temperature above 540°F, and preferably between 540°F and 1540°F. Also the temperature of the superheated steam entering the infrared zone of the infrared oven preferably ranges from about 297°F to 792°F.

A preferred infrared oven is a radiant wall oven manufactured by Pyramid Food Processing Equipment Manufacturing, Inc. of Tewksbury, Mass., the Assignee, with which the superheated steam source described above is incorporated.

Radiant wall ovens, used alone and in combination with other cooking devices, such as microwave ovens, are described in U.S. Patent Nos. 5,512,312 and 5,942,142, each issued to Forney et al., the disclosures of which are expressly incorporated herein in their entireties.

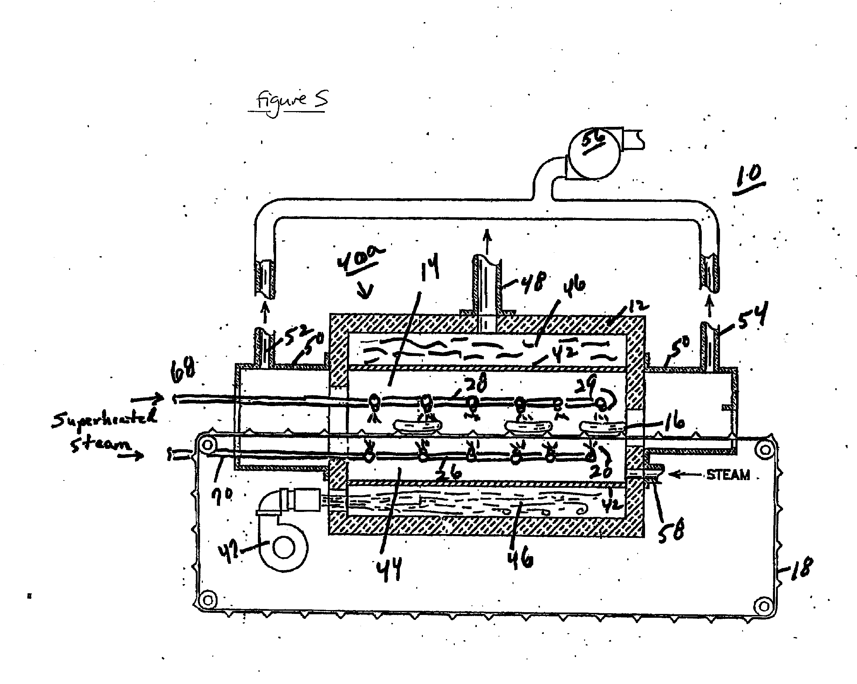

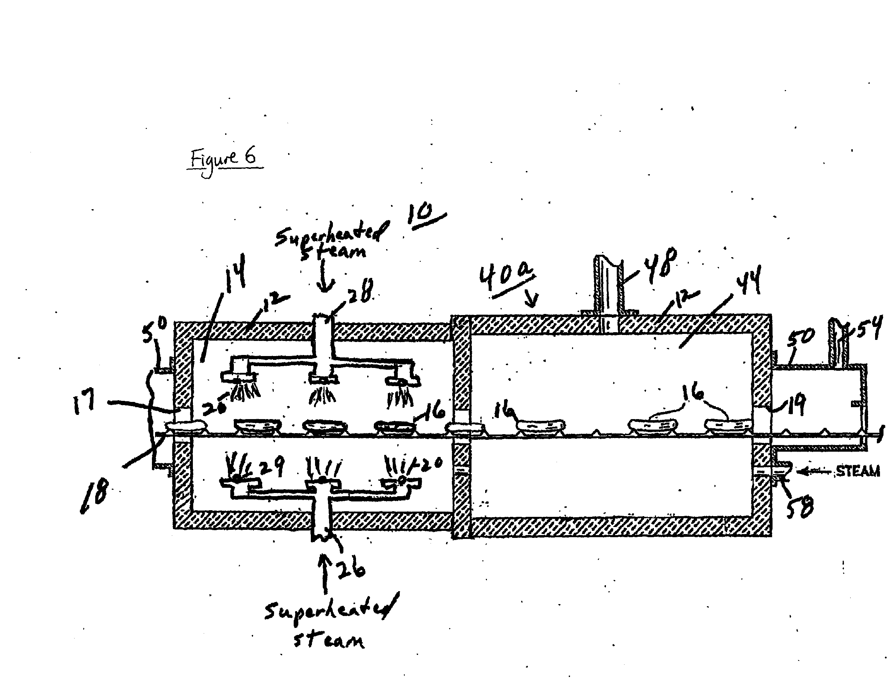

Such a radiant wall oven 40a, as shown particularly in Fig. 5, includes one continuous wall 42 extending peripherally around and defining the boundary of an oven chamber 44, which is a part of the browning chamber 14 in this embodiment. This wall 42 is heated via a heat plenum 46 above and below the wall 42. The walls 12 surrounding the plenum 46 are insulated. A gas burner 47 directs a flame into the plenum 46, preferably at the bottom, so that hot gases from the flame surround the radiant wall 42 within the plenum 46. An exhaust 48, located at the top of the processor 10, is necessary to direct the captured heat, gases, smoke, etc. away from the plenum 46. The heat from the high-temperature exhaust 48 can be used to generate superheated steam, as discussed below.

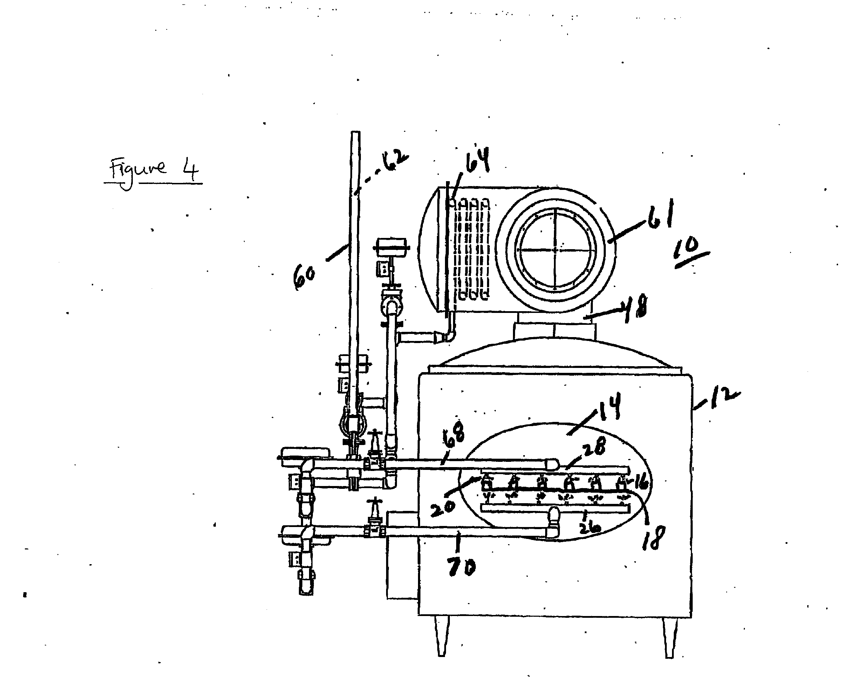

With a high temperature infrared oven 40a such as this, a hood 50 at either end of the processor 10 is also necessary to capture the escaping heat. Fig. 5 shows vents 52 and 54 positioned to draw off gases, as well as any smoke present, from the oven chamber 44 on a continuous basis. A fan or suction unit 56 is connected to these vents. In Fig. 4, the hood 50 is not shown for clarity of the remaining components.

A steam source 60, such as a pipe leading from a Latiner Boiler (e.g., 5HP, 260,000 BTU) (not shown), provides conventional steam 62 past a bypass 63 and along a path of pipes 65 to a coil 64, preferably made of stainless steel. The coil 64 is located in a housing 61 in fluid communication with the high temperature exhaust 48 of the oven 40a. In this regard, current radiant wall ovens can be retrofitted to receive a coil 64 in their exhausts. Alternatively, the coil 64 can be placed in the plenum 46 of the oven, or can be placed in a separate heat source and directed to the processor 10.

While the conventional steam 62 is moving through the coil 64 it becomes superheated due to the high temperatures (about 1325°F to about 1540°F). It is at this point that the steam is transformed from conventional steam 62 at 212°F to superheated steam 66 at above 212°F, e.g., at about 750°F to 800°F. When released into the chamber 44 via the slots 29, it is preferably about 400-500°F.

Thus, the present invention takes relatively low pressure steam and subjects it to high heat to significantly raise the temperature of the steam, and therefore produce superheated steam. In this way, the superheated steam used is not dependent upon increased pressure, but is based on exposure to external BTU's.

Using the coil 64 to generate the superheated steam is preferred, as it is more economical than using other energy sources. That is, a gas fired radiant wall oven will operate more efficiently and at a lower cost than relying upon a resistance or micro-wave type heating source, both of which rely upon electricity.

The temperatures/pressures of the superheated steam, oven chamber 44 atmosphere temperature and oven wall 42 temperature are again detected by various conventional sensors 27 in the system and fed to the controller 32 (not shown in Figs. 3-5). Also, the flow of the superheated steam in the line can be measured by a flowmeter, such as a Spirax Sarco flowmeter connected to a controller or to a conventional steam flow computer, such as a Spirax Sarco steam flow computer.

Preferably, the superheated steam 66 is injected into the processor 10 from above and below the food products 16, or even on the sides, via pipes 68, 70 leading to the pair of stainless steel tubes 26, 28 for even steam delivery throughout the length of the chamber 14 of the processor 10 (which includes the oven chamber 44). That is, preferably the food product 16 is surrounded by the superheated steam during the browning phase. The slots 29 are again positioned above and below the food products, preferably a distance "I" equivalent to 1" to 18" from the food product 16 surface.

The product may be subjected to this infrared heat and steam combination for 10 seconds to 240 seconds to effect browning. The amount of time depends on the size and thickness of the food product.

Separately, as shown in Fig. 5, and as described below, when the processor 10 is used to both brown and cook, the cooking step can include the use of superheated steam alone, or in combination with conventional steam. In this latter regard, Fig. 5 illustrates the introduction of conventional steam through the inlet 58. The source of the conventional steam can again be the Latiner boiler.

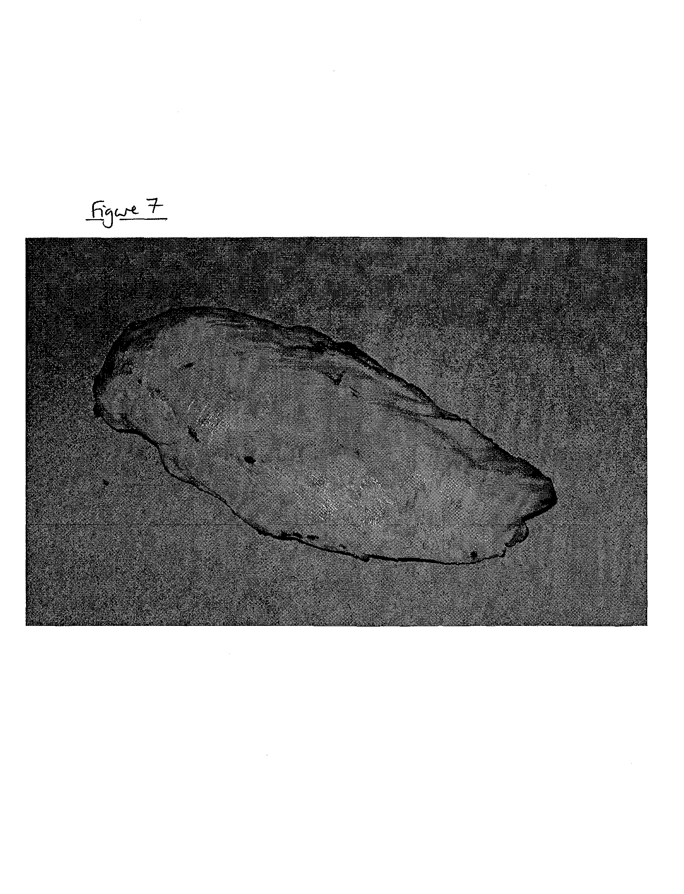

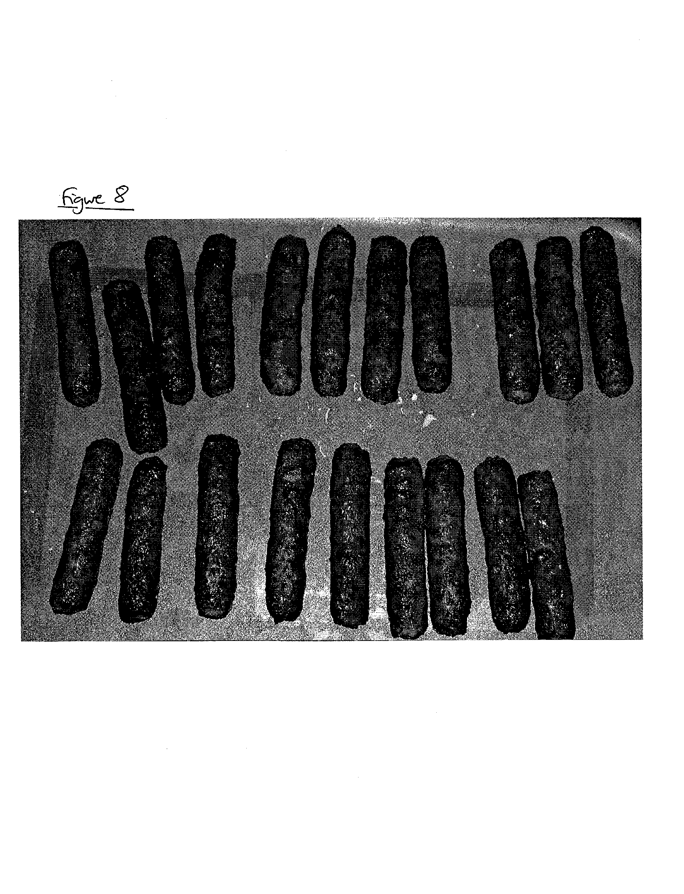

In still another embodiment shown in Fig. 6, the processor 10 can include both a browning chamber 14 as described above, and a separate cooking chamber 44, so that the food products 16 can be sequentially browned and cooked. The conveyer 18 continuously moves the food products 16 from the browning chamber 14 and through the cooking chamber 44.

Cooking of the food product 16 is dependent upon the thickness of the product, the amount of time that the product is exposed to a heat source, and the intensity of the heat source. Above it is noted that browning can occur in less than 240 seconds. For some thin products (e.g., burgers and sausage patties) exposure to the superheated steam and heat source for a period of time not only browns such a thin product, but can fully cook it.

By using different browning 14 and cooking chambers 44, the temperatures of each and\or the heating sources therefore, can be different, if desired. For example, the browning employing superheated steam might occur in the chamber 14 at a lower temperature than in the cooking chamber 44. Also, the separate cooking source could be a microwave oven, a hot air impingement oven, an infrared oven, etc. Similarly, if external heat is added in the browning chamber 14, it can be from, hot air, infrared, etc. Further, by using separate browning and cooking chambers, there is better control over product throughput, yield and color consistency. Thus, the separate cooking chamber adds flexibility and control. As the browning phase creates a relatively harsh environment for full cooking, a separate cooking phase can be accomplished with a lower temperature and more wet steam.

An important feature of this embodiment is that it has essentially two stages of cooking while still being a continuous process, fed by the conveyor. Browning is accomplished in a first chamber 14, then full cooking occurs in the adjacent chamber 44. Of course the direction of the conveyor could be reversed to cook the product before the high temperature browning. However, it is normally advantageous with most commercial cooking, wherein the product is frozen or cold before entering the oven, to first brown the food product. This effectively browns the surface without breaking down internal fats, oils and moisture. Then slower, lower temperature full cooking would take place, and the overall loss of these fats, oils and moisture is far less than if the product were first heated to, say, 120° F. internally in a cooking oven 44 and then subjected to the very high temperature radiant walls in the chamber 14 for the browning characteristics.

In the case of a microwave oven, a conventional metal conveyor belt 18 cannot be used. The conveyor is typically of plastic materials, as is known in the commercial microwave industry. In the usual case wherein browning is accomplished first, a metal conveyor from the processor 10 passes adjacent to a plastic conveyor destined for the microwave for cooking. Food products 16 are transferred between the metal and plastic conveyors via known rollers.

Other types of heat sources that are applicable to the present invention include convection, smoke house, hot air impingement, other types of infrared, such as electrical resistance instead of liquid or gas fueled, or any other type of oven that provides a heat source.

Instead of separate browning and cooking chambers, the processor 10 can include a single chamber for both browning and cooking, so that the food product can be browned and cooked at the same time. See, e.g., Fig. 3. The superheated steam 20 and the heat for the cooking would exit into the same chamber, and the food products would be moved through this single chamber to be simultaneously browned and cooked. Again, either the cooking could occur first, or the browning, as desired.

Thus, in any of the embodiments above, wherein a cooking unit is employed either integrally or separately, the present invention also has the advantages of being able to brown and cook a food product in a single cycle, on a single conveyor path.

The invention also includes the use of superheated steam to cook the food product. That is, the processing time required to fully cook the food product to a desired internal temperature can also be decreased when the product is placed in a superheated steam environment. As shown in Fig. 6, the superheated steam for cooking could be introduced into the cooking chamber 44 via inlet 58.

This processing time for cooking can be further decreased when the food product 16 is placed in a superheated steam environment in combination with lower temperature, i.e., conventional steam (160°F to 212°F). Again, inlet 58 can be used for introduction of the conventional steam. Alternatively, separate inlets can be used for the superheated steam and conventional steam, respectively.

The conventional steam serves the purposes, when mixed with the superheated steam, of reducing the temperature of the superheated steam that gets to the surface of the food product, and to increase the humidity of the over chamber 44, where desired. Even with the addition of conventional saturated steam to the superheated steam, the overall mixture in the chamber 44 is still relatively dry.

This mixing of superheated and non-superheated steam can be utilized to create the desired atmosphere in the processing equipment to maximize product yield, maintain proper desired browning characteristics of the product, while decreasing time for thermal processing to a desired internal product temperature.

It is also possible to introduce conventional steam anywhere along the conveyor path, and only periodically introduce superheated steam into the chamber, thereby effecting a mix of conventional and superheated steam.

Without further elaboration, it is believed that one skilled in the art, using the preceding description, can utilize the present invention to its fullest extent. The following examples, therefore are to be construed merely illustrative, and not limitative in any way whatsoever, of the remainder of the disclosure.

### EXAMPLES

A series of food products 16 was introduced into a steam cabinet via the 10 conveyer 18 under one of the following conditions: (a) with the addition of superheated steam; and (b) without the addition of superheated steam. The steam cabinet temperature and belt speed remained constant.

Photographs of each product were taken to show the relative browning of the food products in the superheated steam environment.

### Example 1

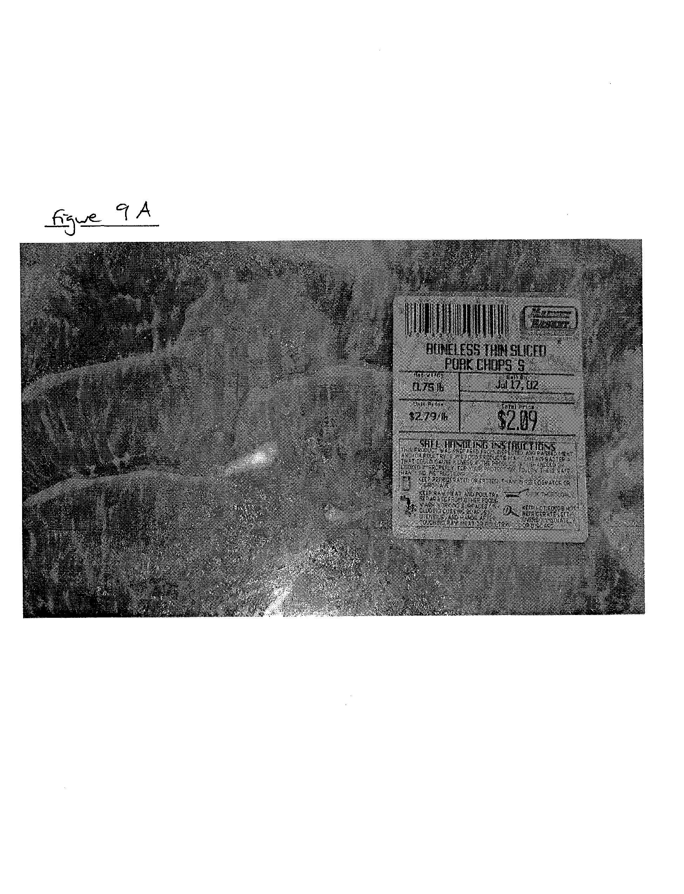

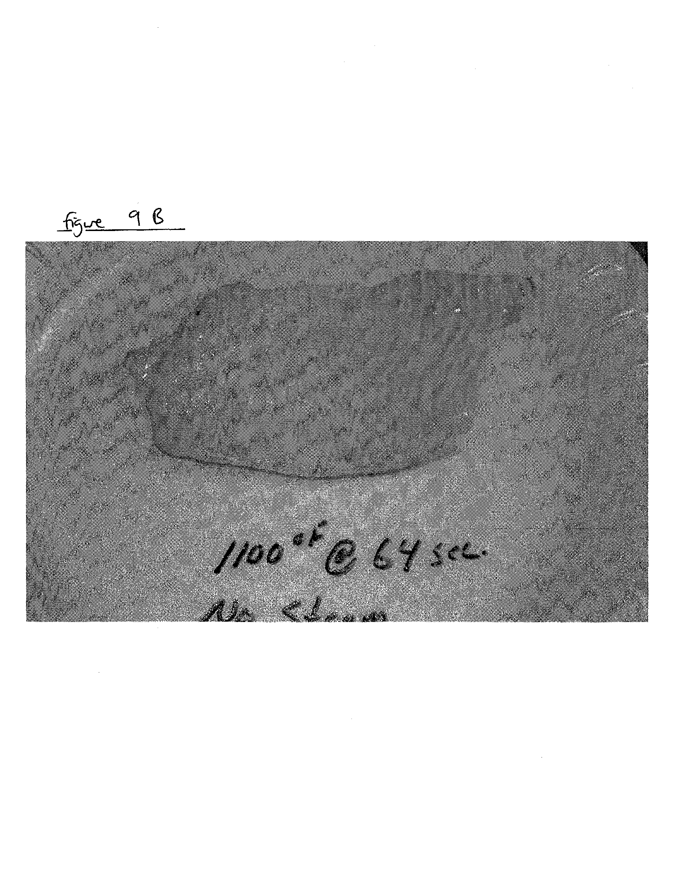

Boneless, skinless chicken breast was purchased at a supermarket. The product was not processed in any manner prior to the following browning process according to the present invention. The food product was placed in the steam cabinet and superheated steam was applied. The product was removed after browning occurred. The temperature of superheated steam entering the steam cabinet was 372°F. The temperature of the processing environment in the steam cabinet was 266°F. The dwell time of the product in the steam cabinet was 82 seconds. The food product exhibited a light brown color with even browning. See Fig. 7.

### Example 2

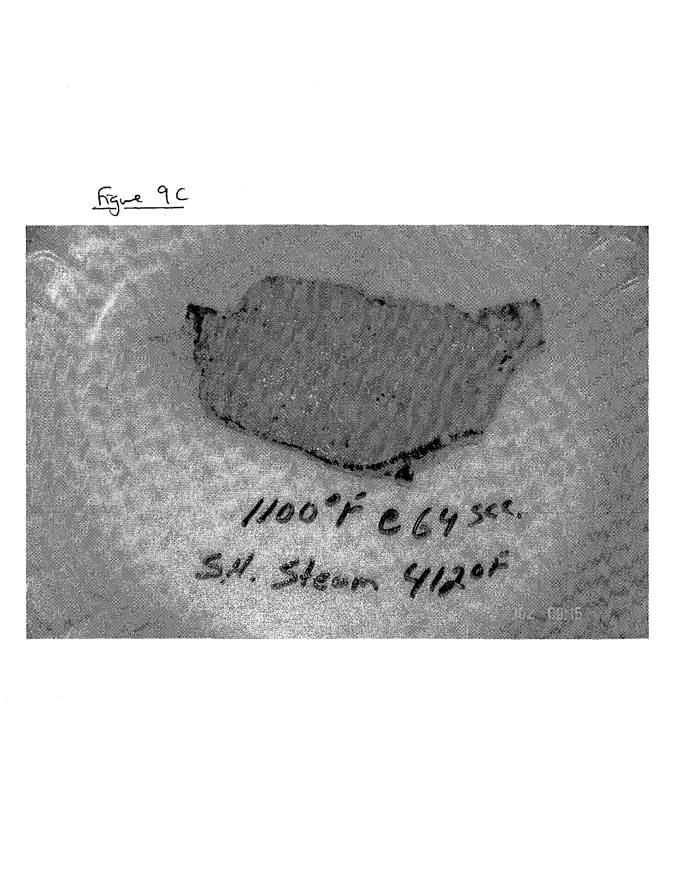

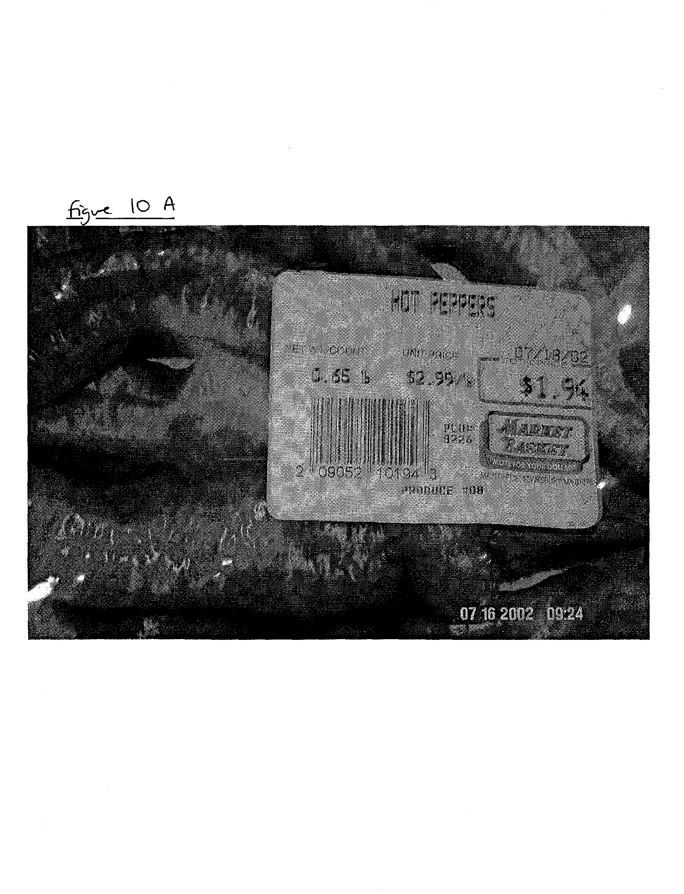

Breakfast sausage links were purchased at a supermarket, and were not processed in any manner prior to the browning process described below. The product was placed in the steam cabinet and superheated steam was applied. The superheated steam delivery was positioned directly above the sausage links (less than 8" from the top of the product). The product was removed after browning occurred. The temperature of the superheated steam entering the steam cabinet was 412°F. The temperature of the processing environment in the steam cabinet was 300°F. The dwell time of the product in the steam cabinet was 90 seconds. The product exhibited a dark brown color with even browning. See Fig. 8.

### Example 3

A sample of the sausage product, as discussed in relation to the Example 2 above, was browned with superheated steam, according to the present invention, and fully cooked with non-superheated (conventional) steam.

### Example 4

A sample of the sausage product, as discussed in relation to Example 2 above, was browned with superheated steam, and fully cooked with superheated steam, both according to the present invention.

### Example 5

The same sausage product, as discussed in relation to Example 2 above, was browned with superheated steam, fully cooked with a combination of superheated steam and non-superheated steam, both according to the present invention.

The data in Table 2 below explains the test parameters of Examples 3-5 listed above. The table illustrates that the sausage food products that were tested according to the present invention's use of superheated steam, which exhibited significantly increased browning, did not result in significant shrinkage.

**TABLE 2**

| Example | Raw Wt. (g) | Super-heated Steam Temp. | Steam Cabine t Temp. | Browning Dwell time | Browned Product Temp. | Browned Product Wt. (g) | Superheated Steam Temp. (Cook Process) | Steam Cabinet Temp. | Cook Dwell Time | Cooked Product Temp. | Cooked Product Temp. | Cooked Product Wt. (g) | Finished Yield |
|---|---|---|---|---|---|---|---|---|---|---|---|---|---|
| 3 | 470g | 412°F | 300°F | 90 Sec. | 106°F | 435g | Not Used | 203°F | 191°F | 174 Sec. | 165°F | 425g | 90.43% |
| 4 | 475g | 414°F | 301°F | 90 Sec. | 108°F | 440g | 411°F | Not Used | 299°F | 132 sec. | 166°F | 420g | 88.98% |
| 5 | 470g | 411°F | 300°F | 90 Sec. | 108°F | 435g | 411°F | 205°F | 265°F | 150sec. | 166°F | 430g | 91.49% |

In the above Examples 1-5, a steam cabinet was used as part of the processor 10. In the following examples. Superheated steam was generated and introduced into the processor 10 (including a radiant wall oven) throughout the length of the effective infrared zone of the radiant wall oven chamber.

### Example 6

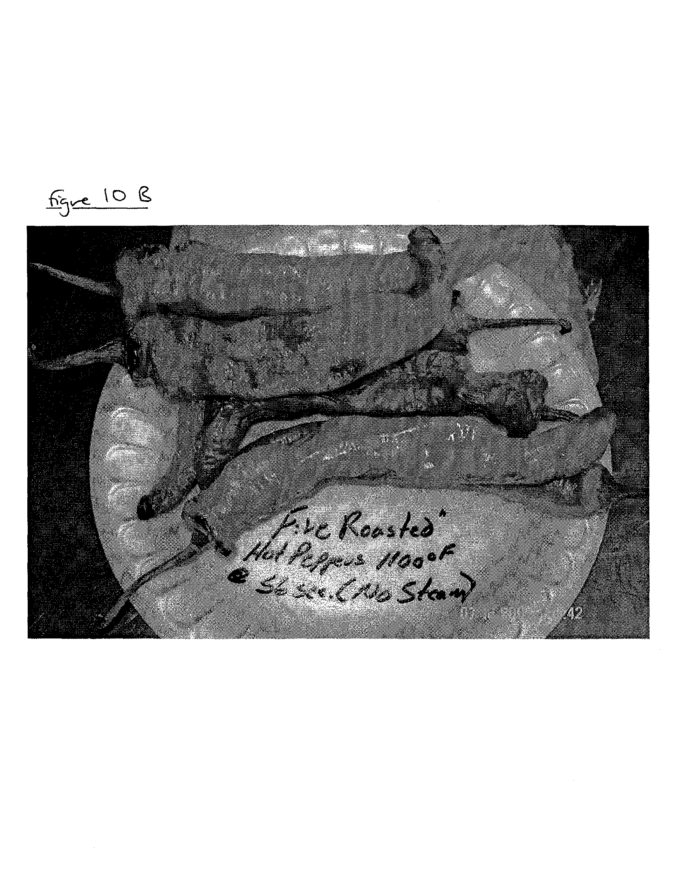

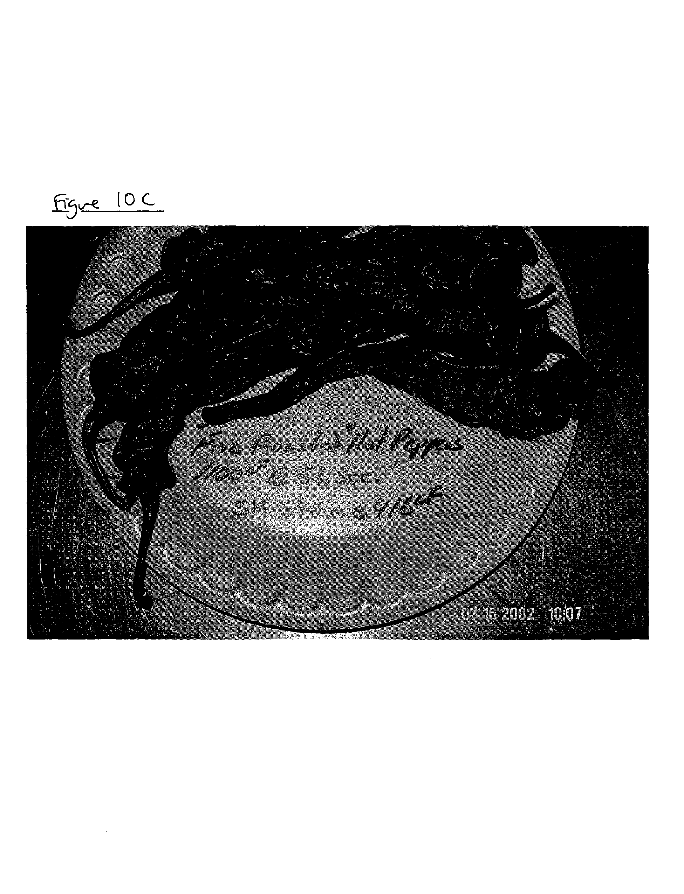

Boneless thin sliced pork chops were purchased at a supermarket. See Fig. 9A. The product was not processed in any manner from the time it was removed from the package until the time it was introduced into the radiant wall oven.

Samples of the product were placed in the radiant wall oven without the addition of superheated steam. The operating temperature of the radiant wall oven was 1100°F. Product dwell time in the oven was 64 seconds. The product exhibited a light brown color with more intense browning noted towards the edges of the product. See Fig. 9B.

Samples of the product were placed in the radiant wall oven with the addition of superheated steam according to the present invention. The operating temperature of the radiant wall oven was 1100°F. Product dwell time in the radiant wall oven was 64 seconds. Delivery temperature of the superheated steam was 412°F. The product exhibited a much more golden brown color with more even color distribution. See Fig. 9C.

### Example 7

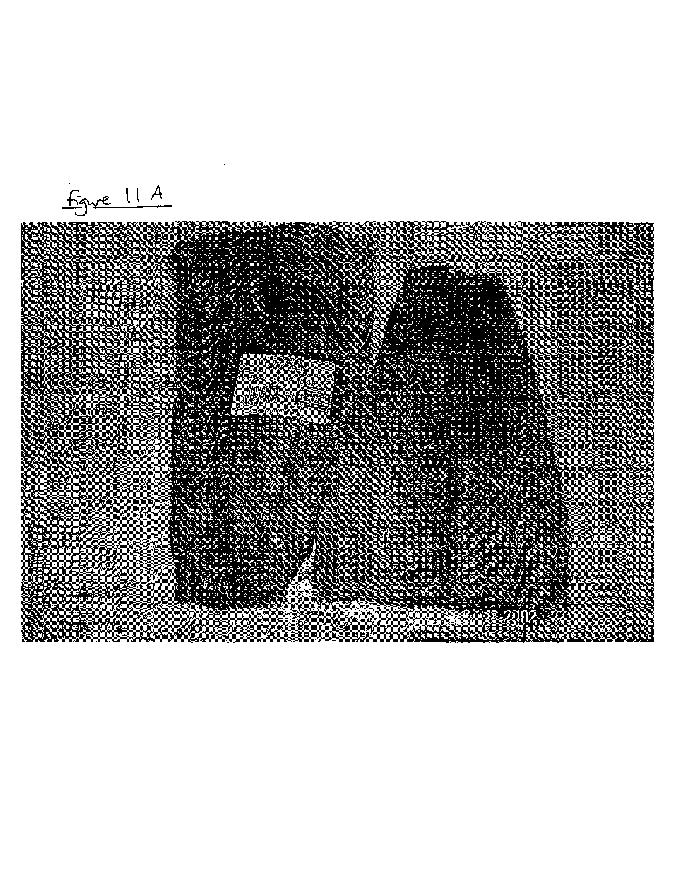

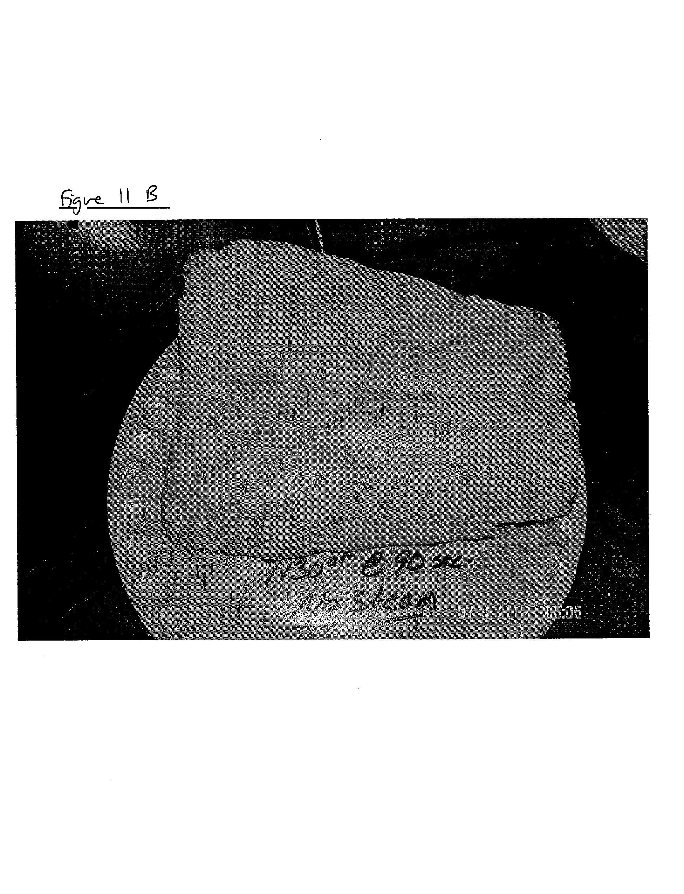

Hot peppers were purchased at a supermarket. See Fig. 10A. The product was not processed in any manner from the time it was removed from the package until the time it was introduced into the radiant wall oven.

Samples of the product were placed in the radiant wall oven without the addition of superheated steam. The operating temperature of the radiant wall oven was 1100°F. Product dwell time in the radiant wall oven was 64 seconds. The product exhibited slight browning with uneven color distribution. See Fig. 10B.

Samples of the product were placed in the radiant wall oven with addition of superheated steam. The operating temperature of the radiant wall oven was 1100°F. Product dwell time in the radiant wall oven was 64 seconds. Delivery temperature of the superheated steam was 416°F. The product exhibited a very dark brown to almost black color throughout. See Fig. 10C.

### Example 8

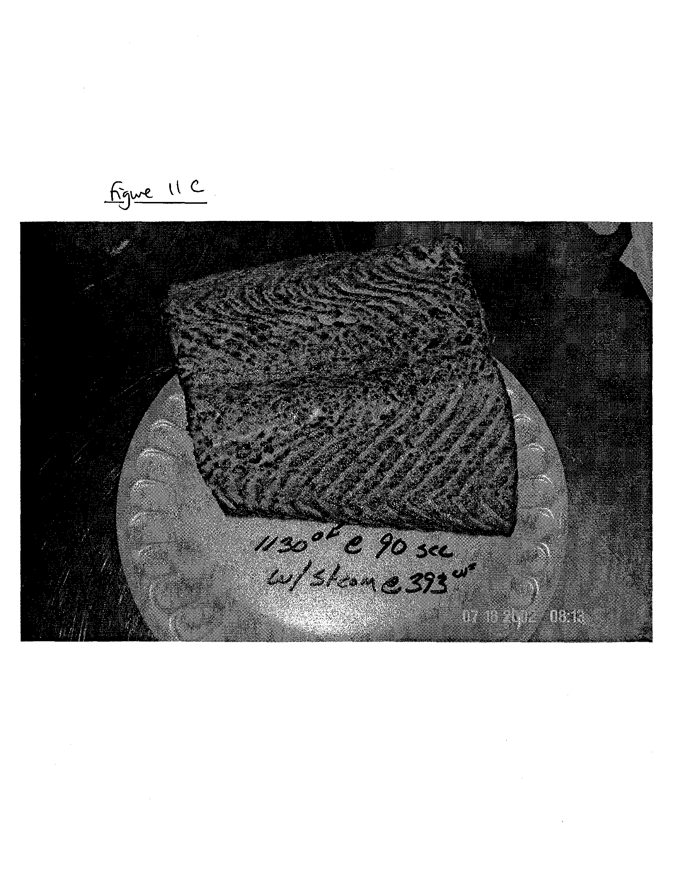

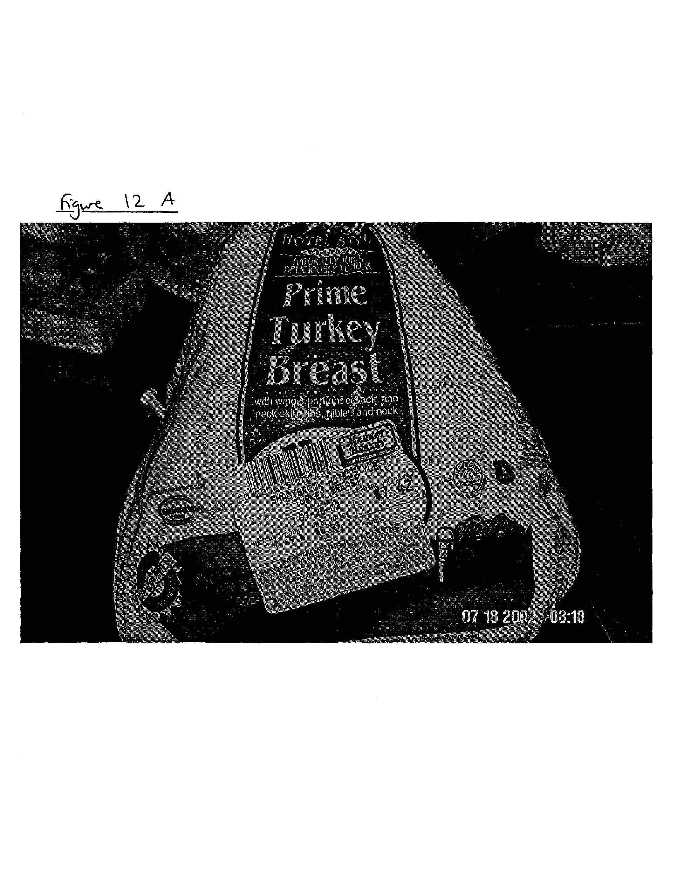

Farm raised salmon filets were purchased at a supermarket. See Fig. 11A. The product was not processed in any manner from the time it was removed from the package until the time it was introduced into the radiant wall oven.

Samples of the salmon product were placed in the radiant wall oven without the addition of superheated steam. The operating temperature of the radiant wall oven was 1130°F. Product dwell time in the radiant wall oven was 90 seconds. The product exhibited slight browning towards the edges of the product . See Fig. 11B.

Samples of the salmon product were placed in the radiant wall oven with the addition of superheated steam. The operating temperature of the radiant wall oven was 1130°F. The product dwell time in the radiant wall oven was 90 seconds. The delivery temperature of the superheated steam was 393°F. The product exhibited a rich brown appearance with blackened notes traditionally accepted for this type of product. The color distribution was greater than the salmon sample discussed immediately above where no superheated steam was used.
Compare Fig. 11C with Fig. 11B, respectively.

### Example 9

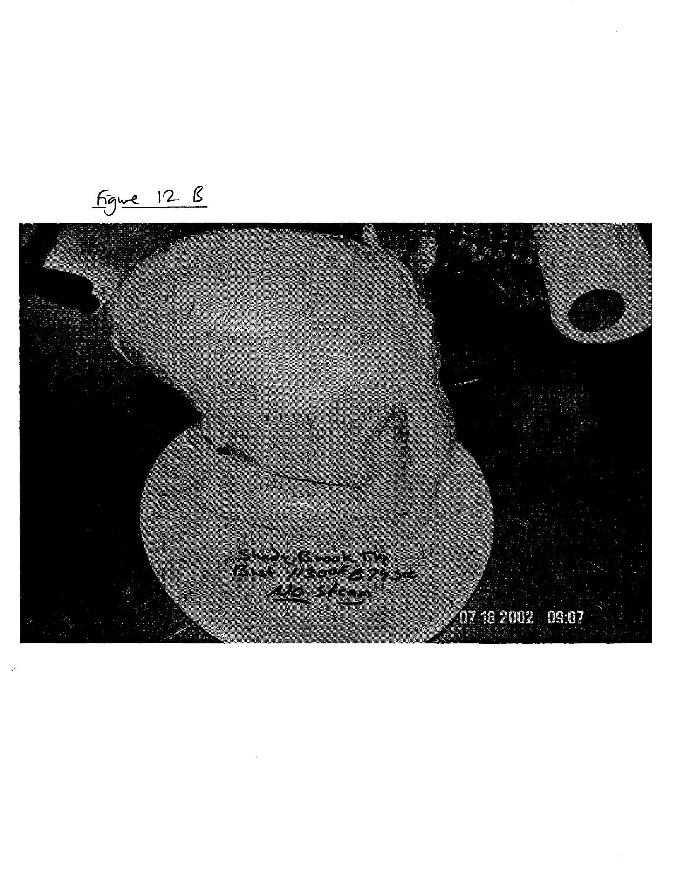

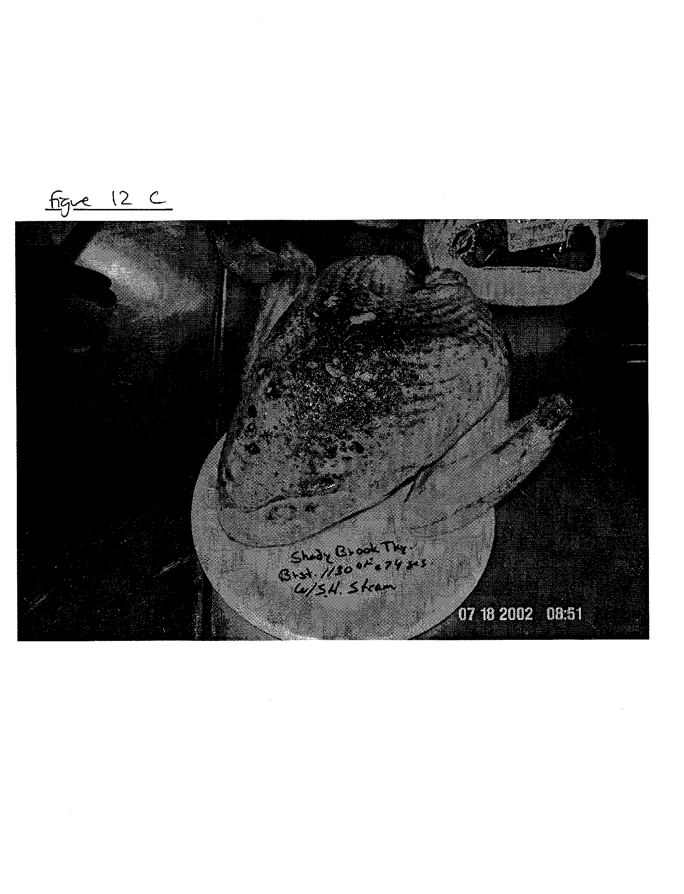

Bone in turkey breasts were purchased at a supermarket. See Fig. 12A. The product was not processed in any manner from the time it was removed from the package until the time it was introduced into the radiant wall oven.

A sample of the turkey product was placed in the radiant wall oven without the addition of superheated steam. The operating temperature of the radiant wall oven was 1130°F. Product dwell time in the radiant wall oven was 74 seconds. The product exhibited slight browning towards the edges and wing tips of the product. See Fig. 12B.

A sample of the product was placed in the radiant wall oven with the addition of superheated steam. The operating temperature of the radiant wall oven was 1130°F. Product dwell time in the radiant wall oven was 74 seconds. The delivery temperature of the superheated steam was 396°F. The product exhibited an even browned appearance with some burning of the skin on the top of the product, which was close to the superheated steam delivery. The color distribution was greater than the turkey sample immediately discussed above. Compare Fig. 12C with Fig. 12B, respectively.

The following additional tests shown in Table 3 below were performed using a processor 10 incorporating a radiant wall oven, wherein the superheated steam is generated by the coil 64 placed in the plenum 46 of the oven, between walls 42 and 12. The controller 32 measured the temperature of the superheated steam, the oven atmosphere in the chamber 44, and the oven wall 42 temperature.

**TABLE 3**

| Product | Raw Wt. | Oven Wall/Temp./Dwell | Superheated Steam Temp. | Oven Atmosphere Temp. | Browned/ Cooked Wt. | Browned/ Cooked Yield | Comments |
|---|---|---|---|---|---|---|---|
| Chicken Breast 3" | 195g | 1075°F @ 70 Sec. | 790°F | 850°F | 180g | 92.31% | Light in Color |
| Chicken Breast 2.5" | 160g | 1075°F @ 80 sec. | 785°F | 816°F | 145g | 90.62% | Same as Above |
| Chicken Breast 2.25" from | 225g | 1100°F @ 80 sec. | 782°F | 845°F | 210 | 93.33% | Much Darker |

In the following tests, shown in Table 4, superheated steam was introduced into a steam cabinet. A radiant wall oven was only used for the purpose of generating the superheated steam.

**TABLE 4**

| Product | Raw Wt. | Radian Wall Oven Temp./Dwell | Superh eated Steam Temp. | Radian Wall Oven Atmosphe re | Steam Dwell | Cooked Wt. | Final Yield |
|---|---|---|---|---|---|---|---|
| Bacon | 210g (10 Strips) | 1100°F | 524°F to 593°F | 326°F to 388°F | 7 Min. | 65g | 31.43% |
| Bacon | 105g (6 Strips) | 1100°F | 620°F | 468°F | 3 min. 17 sec. | 45g | 42.86% |

In these bacon examples, the bacon exhibited better color and texture than conventional precooked bacon, which relies upon a microwave cooking process. The process could also be reduced, to about 3 minutes, when the superheated steam was introduced from both above and below the food products.

In the following test, shown in Table 5, a radiant wall oven was used to brown, and a steam cabinet was used to cook, the chicken breasts. The steam cabinet used a mixture of superheated steam and conventional (wet) steam at an average combined temperature of 300°F.

**TABLE 5**

| Product | Raw Wt. | Radiant Wall Oven Temp./Dwell | Superheated Steam | Radiant Wall Oven | Browned I-Wt. | Browned Yield | Steam/ Cabinet Temp. | Steam Dwell | Wt./Yield/prod. Internal Temp | Comments |
|---|---|---|---|---|---|---|---|---|---|---|
| Chicken Breast (unmarinated) | 1150g | 1080@76 sec. (1.4) | 888°F | 888°F | 1040g | 90.43% | 300/300 | 11 min. | 855g/74.38% 166°F | Golden Brown in Color |

The following tests, shown in Table 6, used a radiant wall oven with superheated steam for browning, and a steam cabinet with superheated steam for cooking. As can be seen, yield was significantly greater with the present invention.

**TABLE 6**

| Product | Raw Wt. | Radiant Wall Oven/ Superheated Steam Temp./Dwell | Superheated Steam Temp. | Radiant Wall Oven Atmosphere Temp. | Distance of Product from Belt | Browned -Wt. | Browned Yield | Steam Temp/Cabinet Atmos. Temp. | Steam Dwell | Wt/Yield |
|---|---|---|---|---|---|---|---|---|---|---|
| Bone in Chicken Breast | 655g | 1150 @ 1 min.45 sec. (1.1) | 530°F | 722°F | 4" | 635g | 94.95% | 360°F/351°F | 23 min. | 515g/78.62% |
| Bone in Chicken Breast | 675g | 1150@1 min.45 sec. (1.1) | 534°F | 730°F | 4" | 655g | 97.04% | 360°F/351°F | 23 min. | 540g/80.00% |
| Bone in Chicken Breast | 695g | 1150@1 min.45 sec. (1.1) | 737°F | 830°F | 4" | 660g | 94.96% | 360°F /351°F | 23 min. | 545g/78.42% |
| Bone in Chicken Breast | 695g | 1150@1 min.45 sec. (1,1) | 740°F | 829°F | 4" | 655g | 94.24% | 360°F/351°F | 23 min. | 2155g/79.23% |
| Chicken Wings | 1400g (33 sections) | 1150 @ 1min. 56 sec. (1.) | 760°F | 769°F | 3" | 1125g | 80.36% | 365°F/340°F | 4 min. 35 sec. | 1030173.57% |
| Bacon | 215g | Steamer Only | Steamer Only | Steamer Only | Steam er Only | Steamer Only | Steamer Only | 504°F/463°F | 3 min. 18 sec. | 80g/37.21% |
| Bacon | 170g (8 slices trimmed) | Steamer Only | Steamer Only | Steamer Only | Steam er Only | Steamer Only | Steamer Only | 460°F /490°F | 2 min. 16 sec. | 65g/38.24% |
| Bacon | 270g (12 Slices Trimmed) | Steamer Only | Steamer Only | Steamer Only | Steam er Only | Steamer Only | Steamer Only | 480°F/514°F | 5 min. 40se c. | 105g/38.88% |

In the following tests, shown in Table 7 in each box steamer only hamburger patties (85% lean) were browned in a radiant wall oven processor 10, wherein a coil 64 is used to generate the superheated steam. This test was performed to estimate a preferred distance between the food product and the superheated steam outlet, both above and below. In each instance, the product was raised or "lifted" up from the conveyor belt towards the superheated steam slots 29, which were immovably mounted, in this case, 6" above the belt. Thus, if the product is raised or lifted 4" above the belt, it is actually 2" from the superheated steam slots.

**TABLE 7**

| # of Patties/inches of lift | Raw Wt. | Radiant Wall Oven Temp | Superheated Steam Temp. | Atmos. | RWO Wt./Product Internal Temperature | Comments |
|---|---|---|---|---|---|---|
| 1 patty-4" Lift | 120g | 1.8=68 sec @ 1000°F | 729°F | 820°F | 110g at 108°F | More browning on top-need lower lift and top - bottom steam adjust |
| 1 patty-3" Lift | 115g | 1.2=92 sec @ 1050°F | 752°F | 799°F | 105g at 109°F | More browning on bottom |
| 1 patty - No. Lift No Steam | 115g | 1.2=92 sec @ 1100°F | 775°F | 803°F | 105g at 108°F | Very light-almost no browning Excellent browning on both sides |
| 1 Patty-2" Lift | 120g | 1.2=92 sec @ 1100°F | 802°F | 820°F | 95g at 117°F | |

It was found that a 2" lift off the belt was preferred.

In the following test, shown in Table 8, superheated steam was introduced into a small steam cabinet from a coil 64 inside the radiant wall oven firebox. A bacon belly was cut into 4 sections to fit the cabinet. The belly was drenched in a 20% solution of zesty super smoke 100 poly liquid smoke. The following table represents the cook/brown process for the belly sections.

**Table 8**

| Process Notes | Steam Temp. | Steam Dwell | Cooked Wt./Internal Temp. | Yield | Comments |
|---|---|---|---|---|---|
| Belly section drenched in SS-100P at 20% - cooked to skin side up - steamer started cold @ 212°F and gradually warmed up to 344° | 212°F 344°F | 38 min | 1220g@127°F | 88.0% | Acceptable color and texture |
| Belly section drenched in SS-100P at 20%-cooked skin side down-steamer started hot @ 330°F and gradually warmed up to 476°F after 16 min. (Internal temperature was 104°F), switched - over to wet steam, and turned oven off - Steam temp. dropped to 337°F when product was finished, cooking-cooked start wt. was 1510g | 330°F to 476°F to 337°F | 27 min | 1335g @ 137°F | 88.9% | Acceptable color and texture with shorter cook time due to higher starting temperature, Note: Yield would be higher if temp. was lower (127°F). |

The preceding examples can be repeated with similar success by substituting other products for those described above.

While the use of artificial browning agents is no longer necessary with the present invention, there may be specific instances where the use of such conventional agents may be desirable. For example, with whole chickens or turkeys, using a browning agent will help avoid areas such as under the wing which might appear whitish since the superheated steam may not be able to impinge upon and fully brown such areas.

Also, it is known in the art to apply branding stripes to some food products to impart an appearance of grilling. See, e.g., U.S. Patent No. 4,297,942, issued to Caridis et al. Again, if desired, this conventional striping can be used with the present invention.

## Claims

1. A method for browning a food product, comprising the step of:
exposing the food product to superheated steam at a distance sufficient to brown the surface of the food product.

2. A method as claimed in claim 1, wherein the distance is 1" to 18".

3. A method as claimed in claim 1 or 2, wherein the temperature of the superheated steam is greater than 212°F and less than 750 °F.

4. A method as claimed in any one of the preceding claims, wherein the temperature of the superheated steam is in the range of 350°F- 450°F.

5. A method as claimed in any one of the preceding claims, wherein the food product is at least one of meat, poultry, seafood, and vegetables.

6. A method as claimed in any one of the preceding claims, further comprising the step of:
cooking the food product with superheated steam at a temperature exceeding 212°F.

7. A method as claimed in claim 6, further comprising the step of:
adding steam at a temperature of 160° to 212°F to the superheated steam during the cooking step.

8. A method as claimed in claim 6 or 7, wherein the browning step precedes the cooking step.

9. A method as claimed in claim 6 or 7, wherein the cooking step precedes the browning step.

10. A method for browning a food product, comprising the step of:
exposing the food product to superheated steam at a distance sufficient to brown the surface of the food product and in an environment having a temperature exceeding an ambient temperature.

11. A method as claimed in claim 10, wherein the temperature of the environment is in the range of 170°F to 212°F.

12. A method as claimed in claim 10 or 11, wherein the environment is a steam cabinet.

13. A method as claimed in claim 10, wherein the temperature of the environment is up to about 540°F.

14. A method as claimed in claim 13, wherein the environment is a conventional oven.

15. A method as claimed in claim 10, wherein the temperature of the environment is in the range of about 540°F to about 1540°F.

16. A method as claimed in claim 15, wherein the environment is an infrared oven.

17. A method as claimed in claim 16, wherein the infrared oven is a radiant wall oven.

18. A method as claimed in any one of claims 10 to 17, wherein the distance is 1" to 18".

19. A method as claimed in any one of claims 10 to 18, wherein the temperature of the superheated steam is greater than 212°F and less than 750°F.

20. A method as claimed in any one of claims 10 to 19, wherein the food product is at least one of meat, poultry, seafood, and vegetables.

21. A method as claimed in any one of claims 10 to 20, further comprising the step of:
cooking the food product using superheated steam at a temperature exceeding 212°F.

22. A method as claimed in claim 21, further comprising the step of:
adding steam at a temperature of 160 ° to 212°F to the superheated steam during the cooking step.

23. A method as claimed in claim 21 or 22, wherein the browning step precedes the cooking step.

24. A method as claimed in claim 21 or 22, wherein the cooking step precedes the browning step.

25. A method for browning and cooking a food product, comprising the steps of:
exposing the food product to superheated steam at a distance sufficient to brown the surface of the food product and in an environment having a temperature exceeding an ambient temperature; and
cooking the food product using superheated steam at a temperature exceeding 212°F.

26. A method as claimed in claim 25, further comprising the step of:
adding steam at a temperature of 160° to 212°F to the superheated steam during the cooking step.

27. A method as claimed in claim 25 or 26, wherein the browning step precedes the cooking step.

28. A method as claimed in claim 25 or 26, wherein the cooking step precedes the browning step.

29. A method as claimed in any one of claims 25 to 28, wherein the temperature of the environment is in the range of about 540°F to about 1540°F.

30. A method as claimed in claim 29, wherein the environment is an infrared oven.

31. A method as claimed in claim 30, wherein the infrared oven is a radiant wall oven.

32. A method as claimed in any one of claims 25 to 31, wherein the distance is 1" to 18".

33. A method as claimed in claim 25, wherein the temperature of the superheated steam is less than 750°F.

34. A method as claimed in claim 25, wherein the food product is at least one of meat, poultry, seafood, and vegetables.

35. A method for browning and cooking a food product, comprising the steps of:
exposing the food product to superheated steam at a distance of 1" to 18" to brown the surface of the food product and in an environment having a temperature exceeding an ambient temperature;
cooking the food product using superheated steam at a temperature exceeding 212°F; and
adding steam at a temperature of 160° to 212°F to the superheated steam during the cooking step.

36. A method as claimed in claim 35, wherein the browning step precedes the cooking step.

37. A method as claimed in claim 35, wherein the cooking step precedes the browning step.

38. A method as claimed in any one of claims 35 to 37, wherein the temperature of the environment is in the range of about 540 °F to about 1540°F.

39. A method as claimed in claim 38, wherein the environment is an infrared oven.

40. A method as claimed in claim 39, wherein the infrared oven is a radiant wall oven.

41. A method as claimed in any one of claims 35 to 40, wherein the temperature of the superheated steam is less than 750°F.

42. A device for browning a food product, comprising:
a processor exposing the food product to superheated steam at a distance sufficient to brown the surface of the food product.

43. A device as claimed in claim 42, wherein the distance is 1" to 18".

44. A device as claimed in claim 42 or 43, wherein the temperature of the superheated steam is greater than 212°F and less than 750°F.

45. A device as claimed in any one of claims 42 to 44, wherein the temperature of the superheated steam is in the range of 350°F - 450°F.

46. A device as claimed in any one of claims 42 to 45, wherein the food product is at least one of meat, poultry, seafood, and vegetables.

47. A device as claimed in any one of claims 42 to 46, further comprising:
a cooking device to cook the food product with superheated steam at a temperature exceeding 212°F.

48. A device as claimed in claim 47, further comprising:
a source adding steam at a temperature of 160° to 212°F to the superheated steam in the cooking device.

49. A device for browning a food product, comprising:
a processor exposing the food product to superheated steam at a distance sufficient to brown the surface of the food product and in a chamber having a temperature exceeding an ambient temperature.

50. A device as claimed in claim 49, wherein the temperature of the chamber is in the range of 170°F to 212°F.

51. A device as claimed in claim 50, wherein the chamber is a steam cabinet.

52. A device as claimed in claim 49, wherein the temperature of the chamber is up to about 540°F.

53. A device as claimed in claim 50, wherein the chamber is a conventional oven.

54. A device as claimed in claim 49, wherein the temperature of the chamber is in the range of about 540°F to about 1540°F.

55. A device as claimed in claim 50, wherein the chamber is an infrared oven.

56. A device as claimed in claim 55, wherein the infrared oven is a radiant wall oven.

57. A device as claimed in any one of claims 49 to 56, wherein the distance is 1" to 18".

58. A device as claimed in any one of claims 49 to 57, wherein the temperature of the superheated steam is greater than 212°F and less than 750°F.

59. A device as claimed in any one of claims 49 to 58, wherein the food product is at least one of meat, poultry, seafood, and vegetables.

60. A device as claimed in any one of claims 49 to 59, further comprising:
a cooking device to cook the food product using superheated steam at a temperature exceeding 212°F.

61. A device as claimed in any one of claims 49 to 60, further comprising:
a source adding steam at a temperature of 160° to 212°F to the superheated steam in the cooking device.

62. A device for browning and cooking a food product, comprising:
a processor exposing the food product to superheated steam at a distance sufficient to brown the surface of the food product and in a chamber having a temperature exceeding an ambient temperature; and
a cooking device to cook the food product using superheated steam at a temperature exceeding 212°F.

63. A device as claimed in claim 62, further comprising:
a source adding steam at a temperature of 160° to 212°F to the superheated steam in the cooking device.

64. A device as claimed in claim 62 or 63, wherein the temperature of the chamber is in the range of about 540°F to about 1540°F.

65. A device as claimed in claim 64, wherein the chamber is an infrared oven.

66. A device as claimed in claim 65, wherein the infrared oven is a radiant wall oven.

67. A device as claimed in any one of claims 62 to 66, wherein the distance is 1" to 18".

68. A device as claimed in any one of claims 62 to 67, wherein the temperature of the superheated steam is greater than 212°F and less than 750°F.

69. A device as claimed in any one of claims 62 to 68, wherein the food product is at least one of meat, poultry, seafood, and vegetables.

70. A device for browning and cooking a food product;
a processor exposing the food product to superheated steam at a distance of 1" to 18" to brown the surface of the food product and in a chamber having a temperature exceeding an ambient temperature;
a cooking device to cook the food product using superheated steam at a temperature exceeding 212°F; and
a source adding steam at a temperature of 160° to 212°F to the superheated steam during the cooking step.

71. A device as claimed in claim 70, wherein the temperature of the environment is in the range of about 540°F to about 1540°F.

72. A device as claimed in claim 71, wherein the chamber is an infrared oven.

73. A device as claimed in claim 72, wherein the infrared oven is a radiant wall oven.

74. A device as claimed in any one of claims 70 to 73, wherein the temperature of the superheated steam is less than 750°F.

75. A device as claimed in any one of claims 70 to 74, wherein the food product is at least one of meat, poultry, seafood, and vegetables.
